# EUROPÄISCHE PATENTANMELDUNG

(11) **EP 3 067 995 A1**
(43) Veröffentlichungstag der Anmeldung: **14.09.2016**
(21) Anmeldenummer: 16158370.3
(22) Anmeldetag: 03.03.2016
(51) Int. Cl.: H01R 13/639, H01R 13/627, H01R 13/703, B60L 11/18

(54) **STECKVERBINDERTEIL MIT EINEM VERRIEGELUNGSELEMENT**

(30) Priorität: 06.03.2015 DE 102015103258
(71) Anmelder: Phoenix Contact e-Mobility GmbH, 32816 Schieder-Schwalenberg (DE)
(72) Erfinder: MOSEKE, Dirk, 37671 Höxter-Lüchtringen (DE)
(74) Vertreter: Janke, Christiane

(57) **Zusammenfassung**

Ein Steckverbinderteil (3) umfasst ein Gehäuse (32), einen an dem Gehäuse (32) angeordneten Steckabschnitt (30), der steckend mit einem zugeordneten Gegensteckverbinderteil (4) in Eingriff bringbar ist, und ein bewegbar an dem Gehäuse (32) angeordnetes Verriegelungselement (31) zum Verriegeln des Steckverbinderteils (3) mit dem Gegensteckverbinderteil (4). Das Verriegelungselement (31) kann zwischen einer verriegelten Stellung, in der das Steckverbinderteil (3) mit dem Gegensteckverbinderteil (4) verriegelbar ist, und einer entriegelten Stellung, in der das Steckverbinderteil (3) von dem Gegensteckverbinderteil (4) entnehmbar ist, bewegt werden. Ein an dem Gehäuse (32) angeordnetes, entlang einer Längsachse (L) zu dem Gehäuse (32) verstellbares Sperrelement (34) dient zum Sperren des Verriegelungselements (31) in der verriegelten Stellung. Dabei ist vorgesehen, dass das Sperrelement (34) um die Längsachse (L) verdrehbar ist, wobei das Sperrelement (34) derart an dem Gehäuse (32) gelagert ist, dass bei einem Verdrehen um die Längsachse (L) das Sperrelement (34) längs entlang der Längsachse (L) bewegt wird, um das Sperrelement (34) zwischen einer sperrenden Stellung, in der das Sperrelement (34) sperrend in Wirkverbindung mit dem Verriegelungselement (31) ist, und einer entsperrenden Stellung, in der das Sperrelement (34) außer Wirkverbindung mit dem Verriegelungselement (31) ist, zu verstellen. Auf diese Weise wird ein Steckverbinderteil zur Verfügung gestellt, das mit einfachen Mitteln unter Verwendung weniger Bauteile ein Verstellen des Sperrelements ermöglicht.

## Beschreibung

Die Erfindung betrifft ein Steckverbinderteil nach dem Oberbegriff des Anspruchs 1.

Ein derartiges Steckverbinderteil umfasst ein Gehäuse und einen an dem Gehäuse angeordneten Steckabschnitt, der steckend mit einem zugeordneten Gegensteckverbinderteil in Eingriff gebracht werden kann. Ein solches Steckverbinderteil kann beispielsweise als Ladestecker ausgebildet sein, der beispielsweise über ein Ladekabel mit einer Ladestation verbunden ist und in eine Ladebuchse an einem Fahrzeug, insbesondere einem Elektrofahrzeug, eingesteckt werden kann, um auf diese Weise Fahrzeugbatterien zum Betrieb des Fahrzeugs aufzuladen.

Bei Ladesteckern für Elektrofahrzeuge kann vorgeschrieben sein, dass der Ladestecker in einer in eine Ladebuchse eingesteckten Stellung gegen ein Entnehmen gesichert ist. Hierzu ist bei dem Steckverbinderteil ein bewegbar an dem Gehäuse angeordnetes Verriegelungselement vorgesehen, das zum Verriegeln des Steckverbinderteils mit dem Gegensteckverbinderteil dient. Das Verriegelungselement kann zwischen einer verriegelten Stellung, in der es das Steckverbinderteil mit dem Gegensteckverbinderteil verriegeln kann, und einer entriegelten Stellung, in der das Steckverbinderteil von dem Gegensteckverbinderteil entnommen werden kann, bewegt werden.

Mittels des Verriegelungselements wird eine Verriegelung zwischen dem Steckverbinderteil und dem Gegensteckverbinderteil hergestellt, sobald das Steckverbinderteil steckend mit dem Gegensteckverbinderteil in Eingriff gebracht wird. Hierbei kann vorgesehen sein, dass - bei Verwendung des Steckverbinderteils als Ladestecker - ein Ladevorgang erst gestartet werden kann, wenn die Verriegelung zwischen dem Steckverbinderteil und dem - in diesem Fall als Ladebuchse ausgestalteten - Gegensteckverbinderteil hergestellt ist und das Steckverbinderteil somit mit dem Gegensteckverbinderteil gegen ein (ungewünschtes) Entnehmen gesichert ist. Wird die Verriegelung gelöst (was beispielsweise mittels eines geeigneten Schalters detektiert werden kann), so wird der Ladevorgang unterbrochen und somit ein Stromfluss eines Ladestroms über das Steckverbinderteil unterbunden.

Weil bei Betätigung des Verriegelungselements zum Entriegeln es zu einer Unterbrechung eines Ladevorgangs kommen kann, soll eine Betätigung des Verriegelungselements nur dann erfolgen, wenn dies wirklich angezeigt ist. Beispielsweise soll die Verriegelung zwischen dem Steckverbinderteil und dem Gegensteckverbinderteil bestehen bleiben, bis ein Ladevorgang (vollständig) abgeschlossen ist, um erst nach Beenden des Ladevorgangs ein Entnehmen des Steckverbinderteils von dem Gegensteckverbinderteil zu ermöglichen. Um ein ungewünschtes Entriegeln des Verriegelungselements zu verhindern, ist daher ein an dem Gehäuse angeordnetes, entlang einer Längsachse verstellbares Sperrelement vorgesehen, das zum Sperren des Verriegelungselements in seiner verriegelten Stellung dient. Mittels des Sperrelements wird das Verriegelungselement in seiner verriegelten Stellung gehalten. Erst wenn das Sperrelement das Verriegelungselement freigibt, kann das Verriegelungselement aus seiner verriegelten Stellung heraus bewegt werden, um auf diese Weise das Steckverbinderteil von dem Gegensteckverbinderteil zu entriegeln.

Aus der EP 0 644 625 B1 ist ein Steckverbinderteil in Form eines Ladesteckers bekannt, bei dem eine zur Verriegelung dienende Muffe verdrehbar an einem Gehäuse angeordnet ist. Ein stangenförmig ausgebildetes Sperrelement dient zum Sperren der Muffe in einer verriegelnden Stellung und kann über einen Schlüsselzylinder verstellt werden.

Aufgabe der vorliegenden Erfindung ist es, ein Steckverbinderteil zur Verfügung zu stellen, das mit einfachen Mitteln unter Verwendung weniger Bauteile ein Verstellen des Sperrelements ermöglicht.

Diese Aufgabe wird durch einen Gegenstand mit den Merkmalen des Anspruchs 1 gelöst.

Demnach ist das Sperrelement um seine Längsachse verdrehbar, wobei das Sperrelement derart an dem Gehäuse gelagert ist, dass bei einem Verdrehen um die Längsachse das Sperrelement längs entlang der Längsachse bewegt wird, um das Sperrelement zwischen einer sperrenden Stellung, in der das Sperrelement sperrend in Wirkverbindung mit dem Verriegelungselement ist, und einer entsperrenden Stellung, in der das Sperrelement außer Wirkverbindung mit dem Verriegelungselement ist, zu verstellen.

Das Sperren des Verriegelungselements in der verriegelten Stellung erfolgt über das Sperrelement, das drehbar an dem Gehäuse gelagert ist. Das Sperrelement ist hierbei derart an dem Gehäuse zwangsgeführt, dass bei einem Verdrehen des Sperrelements gleichzeitig und überlagert eine Längsbewegung des Sperrelements entlang seiner Längsachse bewirkt wird, so dass das Sperrelement in Wirkverbindung mit dem Verriegelungselement gebracht wird, um das Verriegelungselement in seiner verriegelten Stellung zu sperren, oder außer Wirkverbindung mit dem Verriegelungselement gebracht wird, um das Verriegelungselement freizugeben und somit zum Entriegeln des Steckverbinderteils von dem zugeordneten Gegensteckverbinderteil entriegeln zu können.

Aufgrund der Zwangsführung des Sperrelements ergibt sich eine einfache Bedienbarkeit bei gleichzeitig einfachem Aufbau unter Verwendung nur weniger Bauteile. So ist zum Sperren bzw. Entsperren des Verriegelungselements allein das Sperrelement zu bewegen, das - beispielsweise elektromotorisch unter Verwendung einer geeigneten Antriebsvorrichtung oder manuell unter Verwendung eines geeigneten Verstellwerkzeugs - um seine Längsachse verdreht werden kann und bei Verdrehen gleichzeitig translatorisch entlang seiner Längsachse bewegt wird, um auf diese Weise das Verriegelungselement zu sperren oder zu entsperren.

Die Lagerung und Zwangsführung des Sperrelements an dem Gehäuse kann beispielsweise über einen Gewindeeingriff erfolgen. Das Sperrelement kann hierzu beispielsweise als Gewindestange bzw. Spindeltrieb ausgebildet sein, die mit einem geeigneten Gewinde bzw. einer geeigneten Gewindesteigung oder mit zumindest abschnittsweise vorgesehenen Gewindegängen an dem Gehäuse in Gewindeeingriff steht und somit eine Verdrehbewegung in zwangsgeführter Weise in eine translatorische Längsbewegung umsetzt.

So kann das Sperrelement einen oder mehrere Gewindegänge aufweisen, die in das Sperrelement eingeformt sind und mit einem oder mehreren Gewindegängen oder abschnittsweise vorgesehenen Gewindegangabschnitten aufseiten des Gehäuses in Eingriff stehen. Bei Verdrehen des Sperrelements gleiten die Gewindegänge aneinander und setzen auf diese Weise die Drehbewegung des Sperrelements in eine Längsbewegung entlang der Längsachse um.

In seiner sperrenden Stellung sperrt das Sperrelement das Verriegelungselement. In dieser sperrenden Stellung ist das Sperrelement beispielsweise mit einem ersten Ende einem Sperrabschnitt des Verriegelungselements angenähert, so dass der Sperrabschnitt des Verriegelungselements durch das Sperrelement in Position gehalten wird und somit das Verriegelungselement nicht ohne weiteres, zumindest nicht ohne Lösen des Sperrelements, aus seiner verriegelten Stellung heraus bewegbar ist.

Um hierbei eine zuverlässige Arretierung des Verriegelungselements in der verriegelten Stellung zu bewirken, kann das Sperrelement beispielsweise an seinem ersten Ende eine geeignete Eingriffseinrichtung, z. B. in Form eines Zapfens, aufweisen, die in der sperrenden Stellung formschlüssig in Eingriff mit dem Sperrabschnitt des Verriegelungselements steht und hierzu beispielsweise in eine Eingriffsöffnung an dem Sperrabschnitt formschlüssig eingreift. Über die Eingriffseinrichtung wird das Verriegelungselement somit, wenn das Sperrelement sich in der sperrenden Stellung befindet, formschlüssig festgelegt, so dass ein Betätigen des Verriegelungselements aus der verriegelten Stellung heraus nicht möglich ist.

Eine Betätigung des Sperrelements kann beispielsweise über ein dem ersten Ende abgewandtes, zweites Ende erfolgen. An diesem zweiten Ende kann - bei elektromotorischer Ausgestaltung - beispielsweise eine elektromotorische Antriebsvorrichtung angreifen, um das Sperrelement zu verdrehen. Alternativ kann - bei manuell zu betätigender Ausgestaltung - an dem zweiten Ende eine Formschlusseinrichtung beispielsweise in Form einer in das zweite Ende eingeformten Vertiefung vorgesehen sein, die ein formschlüssiges Verbinden eines Verstellwerkzeugs mit dem Sperrelement ermöglicht. So kann das Verstellwerkzeug beispielsweise nach Art eines Schraubendrehers oder -schlüssels formschlüssig mit der Formschlusseinrichtung in Eingriff gebracht werden, so dass durch Verdrehen des Verstellwerkzeugs das Sperrelement um seine Längsachse verdreht und auf diese Weise zwischen seiner sperrenden Stellung und seiner entsperrenden Stellung verstellt wird.

Das Sperrelement weist, in einer konkreten Ausgestaltung, beispielsweise einen entlang der Längsachse erstreckten Stangenkörper auf, der in seiner Grundform kreiszylindrisch ausgebildet ist. In den Stangenkörper können ein oder mehrere Gewindegänge eingeformt sein, über die das Sperrelement in Gewindeeingriff mit zugeordneten Gewindegängen des Gehäuses steht. Über den Stangenkörper wird somit die Lagerung und Zwangsführung des Sperrelements an dem Gehäuse bewirkt.

In einer konkreten Ausgestaltung ist an dem Stangenkörper ein Bund angeordnet, der radial über die umfängliche Mantelfläche des Stangenkörpers hinaus nach außen hin vorsteht. Über den Bund kann der Verstellweg des Sperrelements entlang der Längsachse in eine Richtung oder in beide Richtungen begrenzt sein, indem der Bund mit einem Anschlag (zum Begrenzen des Verstellwegs in eine Richtung) oder mit zwei Anschlägen (zum Begrenzen des Verstellwegs in Hin- und Rückrichtung) zusammenwirkt. Sind zwei Anschläge vorgesehen, so ist der Bund - betrachtet entlang der Längsachse - beispielsweise zwischen den Anschlägen angeordnet und wird bei Verstellen des Sperrelements in Richtung der sperrenden Stellung dem einen Anschlag und bei Verstellen des Sperrelements in Richtung der entsperrenden Stellung dem anderen Anschlag angenähert. In der sperrenden Stellung liegt der Bund mit dem einen Anschlag in Anlage. In der entsperrenden Stellung hingegen steht der Bund mit dem anderen Anschlag in Kontakt.

Weil die Verdrehbewegung des Sperrelements mit der Längsbewegung des Sperrelements zwangsgekoppelt ist, entspricht der Verstellweg zwischen der sperrenden Stellung und der entsperrenden Stellung einem vorbestimmten Verdrehwinkel, der beispielsweise zwischen 45° und 85°, vorzugsweise zwischen 60° und 120°, beispielsweise bei 90°, liegt. Um diesen vorbestimmten Winkel ist das Sperrelement zu verdrehen, um das Sperrelement über seinen Verstellweg zu verstellen. Weil der vorbestimmte Winkel vergleichsweise klein, insbesondere kleiner als eine vollständige Umdrehung des Sperrelements ist, kann ein Verstellen des Sperrelements in komfortabler Weise in einem Bewegungsablauf unter Verdrehen des Sperrelements, beispielsweise mit einem geeigneten Verstellwerkzeug, erfolgen.

Das Sperrelement ist vorzugsweise in seiner sperrenden Stellung und/oder seiner entsperrenden Stellung mit dem Gehäuse verrastet. Dies kann für einen Nutzer angenehm sein, weil bei Erreichen der sperrenden Stellung und/oder der entsperrenden Stellung eine - vorzugsweise hör- und fühlbare - Verrastung des Sperrelements erfolgt, so dass der Nutzer eine Information darüber erhält, dass die sperrende Stellung oder die entsperrende Stellung erreicht ist.

Das Sperrelement kann beispielsweise längsbeweglich in einen Griff des Gehäuses eingefasst sein. Der Griff ist beispielsweise an einem dem Steckabschnitt abgewandten Ende des Gehäuses angeordnet und erstreckt sich schräg zu einer Einsteckrichtung, in die der Steckabschnitt in ein zugeordnetes Gegensteckverbinderteil eingesteckt werden kann. In diesem Fall kann sich auch die Längsachse, entlang derer das Sperrelement innerhalb des Griffs zu bewegen ist, schräg zur Einsteckrichtung erstrecken.

Vorzugsweise ist an dem Griff, beispielsweise an einem Boden des Griffs, eine Öffnung vorgesehen, über die das Sperrelement von außen zugänglich ist. Beispielsweise kann ein Nutzer ein Verstellwerkzeug in die Öffnung des Griffs einführen und darüber formschlüssig mit einer Formschlusseinrichtung am zweiten Ende des Sperrelements in Eingriff bringen, so dass über das Verstellwerkzeug von außen auf das Sperrelement zugegriffen werden kann, um das Sperrelement um seine Längsachse zu verdrehen und auf diese Weise zwischen seiner sperrenden Stellung und seiner entsperrenden Stellung zu verstellen.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Elektrofahrzeugs an einer Ladestation zum elektrischen Aufladen einer Batterie des Elektrofahrzeugs;
- Fig. 2: eine schematische Ansicht eines Steckverbinderteils eines Ladekabels;
- Fig. 3A: eine Seitenansicht eines Ausführungsbeispiels eines Steckverbinderteils;
- Fig. 3B: eine Ansicht von unten des Steckverbinderteils;
- Fig. 3C: eine Ansicht von oben des Steckverbinderteils;
- Fig. 4A: eine teilweise freigeschnittene Ansicht des Steckverbinderteils;
- Fig. 4B: eine vergrößerte Darstellung im Ausschnitt A gemäß Fig. 4A;
- Fig. 5A: eine teilweise freigeschnittene Ansicht des Steckverbinderteils, mit einem Sperrelement in einer entsperrenden Stellung, vor Ansetzen eines Verstellwerkzeugs:
- Fig. 5B: die Ansicht gemäß Fig. 5A, bei angesetztem Verstellwerkzeug;
- Fig. 5C: die Ansicht gemäß Fig. 5B, nach Verdrehen des Sperrelements zum Überführen des Sperrelements in eine sperrende Stellung; und
- Fig. 6: eine Explosionsansicht eines Verriegelungselements, eines Sperrelements und einer Gehäusehalbschale eines Gehäuses des Steckverbinderteils.

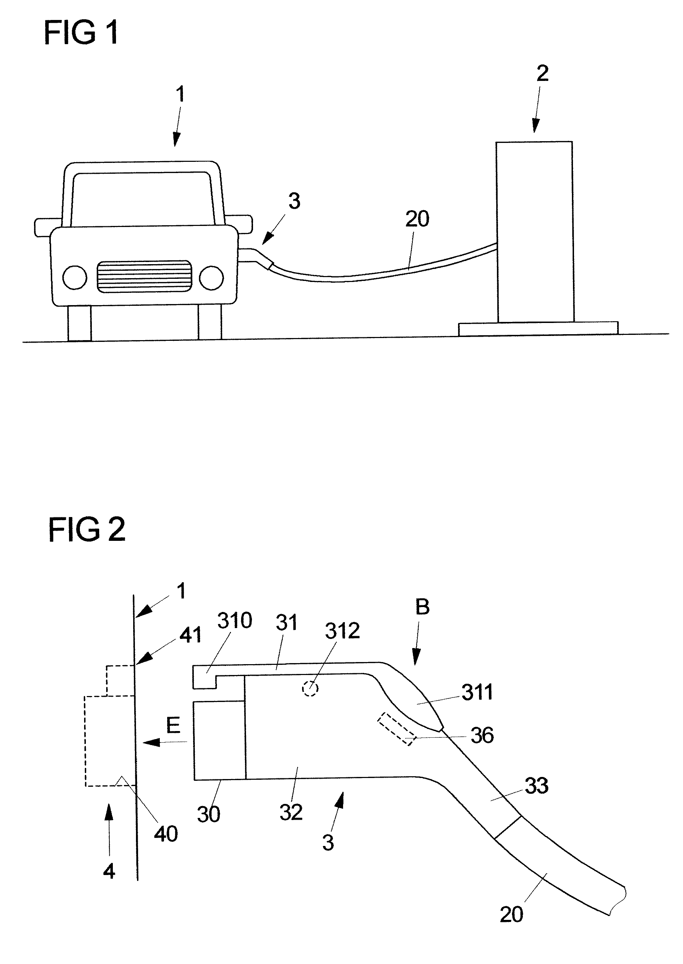

Fig. 1 zeigt in einer schematischen Ansicht ein Fahrzeug in Form eines Elektrofahrzeugs 1, das über ein Ladekabel 20 mit einer Ladestation 20 verbunden ist, um Batterien zum elektrischen Betrieb des Fahrzeugs 1 aufzuladen. An dem Ladekabel 20 ist ein Steckverbinderteil 3 in Form eines Ladesteckers angeordnet, das steckend mit einem zugeordneten Gegensteckverbinderteil in Form einer Ladebuchse an dem Fahrzeug 1 in Eingriff steht, um einen elektrischen Kontakt zwischen dem Ladekabel 20 und dem Fahrzeug 1 herzustellen und Ladeströme von der Ladestation 2 hin zu dem Fahrzeug 1 zu übertragen.

Eine schematische Ansicht des Steckverbinderteils 3 zeigt Fig. 2. Das Steckverbinderteil 3 weist ein Gehäuse 32 und einen daran angeordneten Steckabschnitt 30 auf, der in eine Einsteckrichtung E in eine Stecköffnung 40 eines Gegensteckverbinderteils 4 eingesteckt werden kann. An dem Steckabschnitt 30 des Steckverbinderteils 3 genauso wie in der Stecköffnung 40 des Gegensteckverbinderteils 4 können elektrische Kontakte vorgesehen sein, über die eine elektrische Kontaktierung des Steckverbinderteils 3 mit dem Gegensteckverbinderteil 4 hergestellt werden kann.

An dem Gehäuse 32 ist, abgewandt von dem Steckabschnitt 30, ein Griff 33 ausgebildet, über den ein Nutzer das Steckverbinderteil 3 greifen kann, um dieses an das Gegensteckverbinderteil 4 anzusetzen. In den Griff 33 führt das Ladekabel 20 hinein und ist innerhalb des Gehäuses 32 elektrisch an das Steckverbinderteil 3 und dessen elektrische Kontakte angeschlossen.

Das Steckverbinderteil 3 weist ein Verriegelungselement 31 auf, das um eine Schwenkachse 312 verschwenkbar an dem Gehäuse 32 angeordnet ist. Das Verriegelungselement 31 weist an einem dem Steckabschnitt 30 zugwandten Ende eine Verriegelungsnase 310 auf, die verriegelnd mit einer zugeordneten Verriegelungseinrichtung 41 des Gegensteckverbinderteils 4 in Eingriff gebracht werden kann, wenn das Steckverbinderteil 3 in die Einsteckrichtung E in das Gegensteckverbinderteil 4 eingesteckt wird. Das Verriegelungselement 31 ist hierbei vorzugsweise in eine verriegelte Stellung federelastisch vorgespannt, so dass bei Einstecken des Steckverbinderteils 3 in das Gegensteckverbinderteil 4 die mechanische Verriegelung zwischen dem Verriegelungselement 31 und der Verriegelungseinrichtung 41 selbsttätig hergestellt wird.

Das Verriegelungselement 31 dient dazu, bei eingestecktem Steckverbinderteil 3 die Verbindung zwischen dem Steckverbinderteil 3 und dem Gegensteckverbinderteil 4 mechanisch zu sichern, so dass das Steckverbinderteil 3 nicht ohne weiteres von dem Gegensteckverbinderteil 4 entnommen werden kann. Ein Entnehmen des Steckverbinderteils 3 von dem Gegensteckverbinderteil 4 ist (nur) möglich, wenn das Verriegelungselement 31 zum Entriegeln betätigt wird und hierzu durch manuellen Druck auf einen Betätigungsabschnitt 311 an einem der Verriegelungsnase 310 abgewandten Ende des Verriegelungselements 31 in eine Betätigungsrichtung B aus seiner verriegelten Stellung heraus verschwenkt wird, um die Verriegelungsnase 310 außer Eingriff mit der Verriegelungseinrichtung 41 aufseiten des Gegensteckverbinderteils 4 zu bringen.

Bei dem Steckverbinderteil 3 kann vorgesehen sein, dass ein Ladevorgang, also ein Übertragen von Ladeströmen, nur dann durchgeführt wird, wenn das Verriegelungselement 31 sich in seiner verriegelten Stellung befindet und das Steckverbinderteil 3 somit mit dem Gegensteckverbinderteil 4 verbunden und mechanisch verriegelt ist. Wird das Verriegelungselement 31 zum Entriegeln betätigt, so kann dies über eine geeignete Schalteinrichtung 36, beispielsweise einen mechanischen Taster oder Schalter, detektiert werden. Wird detektiert, dass das Verriegelungselement 31 zum Entriegeln betätigt worden ist, so wird ein Ladevorgang unterbrochen und erst fortgesetzt, wenn das Verriegelungselement 31 wiederum in die verriegelte Stellung überführt worden ist.

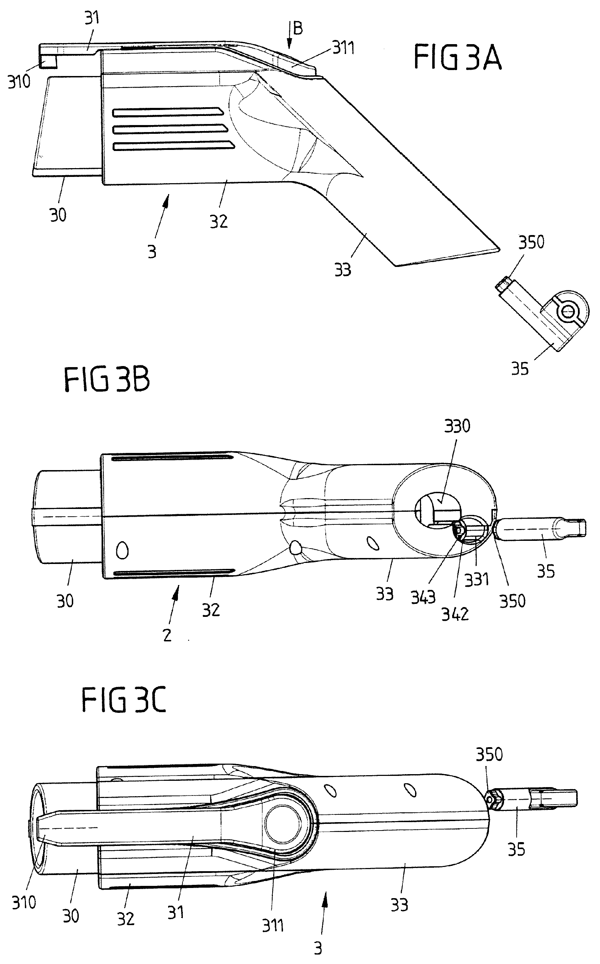

Um eine ungewollte Unterbrechung durch (unbeabsichtigte) Betätigung des Verriegelungselements 31 zu verhindern, ist bei dem Steckverbinderteil 3 ein Sperrelement vorgesehen, das sperrend mit dem Verriegelungselement 31 in Eingriff gebracht werden kann, um das Verriegelungselement 31 in seiner verriegelten Stellung zu halten. Ein konkretes Ausführungsbeispiel eines Steckverbinderteils 3 mit einem solchen Sperrelement 34 zum Sperren des Verriegelungselements 31 in seiner verriegelten Stellung ist in Fig. 3A-3C bis 6 dargestellt.

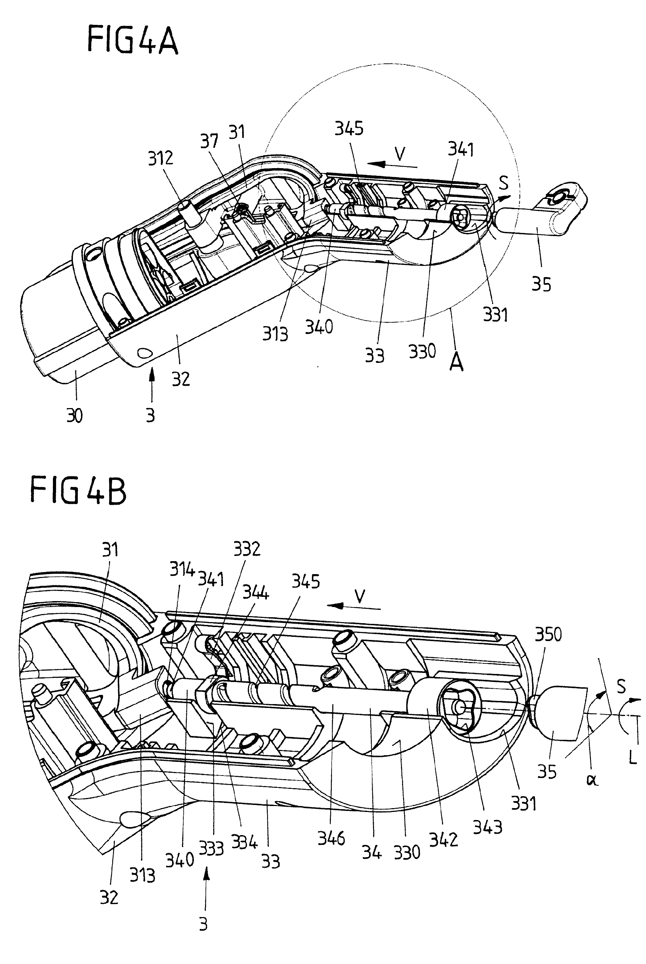

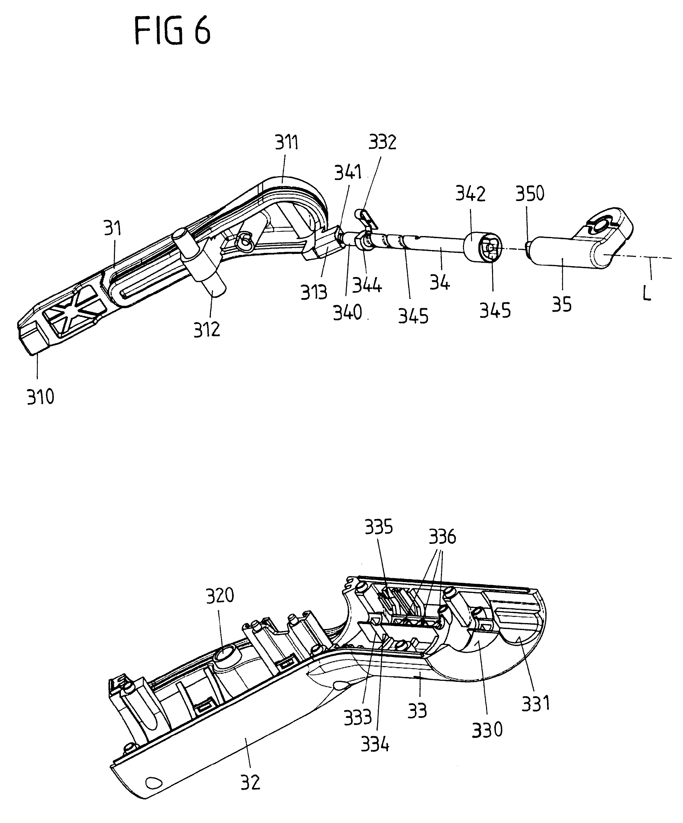

Wie insbesondere aus Fig. 4A und 4B ersichtlich, ist das Sperrelement 34 als Gewindestange bzw. Spindeltrieb ausgebildet und weist einen Stangenkörper 346 auf, in den ein Gewindegang 345 bzw. eine Gewindesteigung eingeformt ist. Der Gewindegang 345 läuft umfänglich um den Stangenkörper 346 um und steht mit Gewindegangabschnitten 336 (siehe Fig. 6) an dem Gehäuse 32 in Gewindeeingriff, so dass bei Verdrehen des Sperrelements 34 um seine Längsachse L der Gewindegang 345 des Sperrelements 34 an den Gewindegangabschnitten 336 des Gehäuses 32 entlang gleitet und auf diese Weise eine Drehbewegung des Sperrelements 34 um die Längsachse L in eine Längsbewegung des Sperrelements 34 entlang einer entlang der Längsachse L gerichteten Verstellrichtung V umgesetzt wird.

Über den Gewindeeingriff des Sperrelements 34 mit dem Gehäuse 32 ist das Sperrelement 34 somit mit dem Gehäuse 32 zwangsgekoppelt. Aufgrund dieser Zwangskopplung wird eine Verdrehung des Sperrelements 34 um seine Längsachse L in eine Längsbewegung entlang der Längsachse L umgesetzt, so dass das Sperrelement 34 zwischen einer sperrenden Stellung, in der das Verriegelungselement 31 verriegelt ist, und einer entsperrenden Stellung, in der das Verriegelungselement 31 zum Betätigen freigegeben ist, verstellt werden kann.

Das Sperrelement 34 ist in den Griff 33 des Gehäuses 32 eingefasst. Das Sperrelement 34 ist hierbei mit einem ersten Ende 340 einem Sperrabschnitt 313 des Verriegelungselements 31 zugewandt und trägt an diesem ersten Ende eine Eingriffseinrichtung in Form eines Zapfens 341, der mit einer Eingriffsöffnung 314 an dem Sperrabschnitt 313 des Verriegelungselements 31 in die Verstellrichtung V in Eingriff gebracht werden kann. In der sperrenden Stellung des Sperrelements 34 greift das Sperrelement 34 mit dem Zapfen 341 in die Eingriffsöffnung 314 des Verriegelungselements 31 ein und arretiert dieses somit in der verriegelten Stellung, so dass das Verriegelungselement 31 in seiner verriegelten Stellung festgelegt ist und nicht aus der verriegelten Stellung heraus betätigt werden kann.

An einem dem ersten Ende abgewandten, zweiten Ende 342 trägt das Sperrelement 34 eine Formschlusseinrichtung 343, die nach Art einer Vertiefung in das zweite Ende 342 eingeformt ist. Mit dem zweiten Ende 342 kommt das Sperrelement 34 im Bereich einer Öffnung 331 am Boden des Griffs 33 zu liegen, so dass über die Öffnung 331 mittels eines Verstellwerkzeugs 35 auf das Sperrelement 34 zugegriffen werden kann, um das Sperrelement 34 um seine Längsachse L zu verdrehen und auf diese Weise zwischen seiner sperrenden Stellung und der entsperrenden Stellung zu verstellen.

Das Verstellwerkzeug 35 weist hierzu ein geeignetes Formschlusselement 350 auf, das formschlüssig mit der Formschlusseinrichtung 343 des Sperrelements 34 in Eingriff gebracht werden kann, so dass bei eingestecktem Verstellwerkzeug 35 ein formschlüssiger Eingriff zwischen dem Verstellwerkzeug 35 und dem Sperrelement 34 besteht und durch Verdrehen des Verstellwerkzeugs 35 somit das Sperrelement 34 bewegt werden kann.

Über eine Öffnung 330 am Boden des Griffs 33 kann dem Steckverbinderteil 3 auch ein Ladekabel 20 zugeführt sein.

Das Sperrelement 34 weist einen Bund 344 auf, der radial über den in seiner Grundform kreiszylindrischen Stangenkörper 346 nach außen hin vorsteht und axial zwischen Anschlägen 333, 334 liegt. Der Bund 344 begrenzt den Verstellweg des Sperrelements 34 entlang der Längsachse L, wobei der Bund 344 in der sperrenden Stellung des Sperrelements 34 dem Anschlag 333 in die Verstellrichtung V hin zum Verriegelungselement 31 angenähert ist, in der entsperrenden Stellung des Sperrelements 34 hingegen dem anderen Anschlag 334 entgegen der Verstellrichtung V angenähert ist.

Der Bund 344 ist an seiner äußeren, umfänglichen Mantelfläche nicht kreisrund geformt, sondern weist eine Kontur auf, die Abflachungen aufweist. Über den Bund 344 wirkt das Sperrelement 34 mit einem Rastelement 332 zusammen, das in einer Halterung 335 des Gehäuses 32 festgelegt ist (siehe Fig. 6). Das Rastelement 332 definiert Rastpositionen für das Sperrelement 34, die von einem Nutzer bei Verstellen des Sperrelements 34 hörbar und fühlbar sind und auf diese Weise dem Nutzer ein Feedback darüber geben, ob das Sperrelement 34 seine sperrende Stellung oder seine entsperrende Stellung erreicht hat. Eine erste Rastposition ist hierbei der sperrenden Stellung zugeordnet, während eine zweite Rastposition in der entsperrenden Stellung eingenommen wird.

In jeder Rastposition hält das Rastelement 332 das Sperrelement 34 in seiner eingenommenen Drehposition, wobei das Sperrelement 34 unter elastischer Deformation des federmechanischen Rastelements 332 aus der Rastposition heraus bewegbar ist. Wesentlich bei den Rastpositionen ist nicht das Halten des Sperrelements 34 in der gerade eingenommenen Drehposition, sondern das Einschnappen des Sperrelements 34 in die Rastposition, so dass ein hör- und fühlbares Feedback über das Erreichen der Position bereitgestellt werden kann.

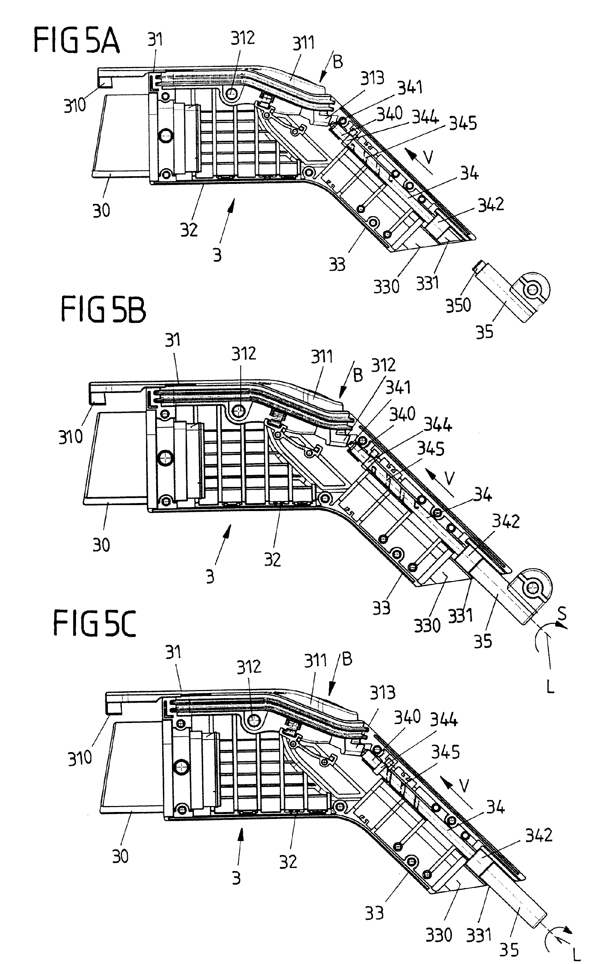

Das Überführen des Sperrelements 34 von seiner entsperrenden Stellung in die sperrende Stellung zeigen Fig. 5A bis 5C. Zum Verstellen des Sperrelements 34 wird das Verstellwerkzeug 35 zunächst mit seinem Formschlusselement 350 mit dem zweiten Ende 342 des Sperrelements 34 in Eingriff gebracht (Fig. 5B). Sodann wird das Verstellwerkzeug 35 um die Längsachse des Sperrelements 34 in eine Drehrichtung S verdreht, so dass auf diese Weise das Sperrelement 34 mit seinem ersten Ende 340 in die Verstellrichtung V dem Sperrabschnitt 313 des Verriegelungselements 31 angenähert und das Verriegelungselement 31 auf diese Weise gesperrt wird (Fig. 5C).

Zum Überführen des Sperrelements 34 von der entsperrenden Stellung (Fig. 5B) in die sperrende Stellung (Fig. 5C) ist hierbei ein Verdrehen des Verstellwerkzeugs 35 um einen Winkel α (siehe Fig. 4B) erforderlich, der beispielsweise zwischen 60° und 120°, insbesondere bei 90°, liegen kann. Weil der Winkel α deutlich kleiner als 360° und auch als 180° ist, kann ein (vollständiges) Verstellen des Sperrelements 34 in einem manuellen Bewegungsablauf erfolgen. Weil sich das Sperrelement 34 aufgrund seiner eingenommenen Rastpositionen zudem in der sperrenden Stellung und der entsperrenden Stellung in definierten Positionen befindet, kann sich das Sperrelement 34 in einfacher Weise mit dem Verstellwerkzeug 35 finden, so dass das Verstellwerkzeug 35 komfortabel an das Sperrelement 34 angesetzt werden kann.

Zum Entsperren wird das Sperrelement 34 in entgegengesetzte Richtung verdreht und somit entgegen der Verstellrichtung V von dem Sperrabschnitt 313 entfernt, so dass das Verriegelungselement 31 ungehindert vom Sperrelement 34 verstellt werden kann.

Wie aus Fig. 4A und 6 ersichtlich, ist das als um seine Schwenkachse 312 an einer Lagerstelle 320 des Gehäuses 32 gelagerte, als Hebel ausgestaltete Verriegelungselement 31 über eine federelastische Vorspanneinrichtung in Form eines Federelements 37 in Richtung seiner verriegelten Stellung vorgespannt.

Der der Erfindung zugrunde liegende Gedanke ist nicht auf die vorangehend geschilderten Ausführungsbeispiele beschränkt, sondern lässt sich grundsätzlich auch in gänzlich anders gearteter Weise verwirklichen.

Ein Sperrelement der hier beschriebenen Art kann elektromotorisch unter Verwendung einer geeigneten elektromotorischen Antriebsvorrichtung oder auch manuell verstellt werden. Bei manueller Verstellung kann als Verstellwerkzeug beispielsweise ein Drehwerkzeug nach Art eines Schraubendrehers oder auch ein Schlüssel oder dergleichen verwendet werden.

### Bezugszeichenliste

- 1: Fahrzeug
- 2: Ladestation
- 20: Ladekabel
- 3: Steckverbinderteil (Ladestecker)
- 30: Steckabschnitt
- 31: Verriegelungselement
- 310: Verriegelungsnase
- 311: Betätigungsabschnitt
- 312: Schwenkachse
- 313: Sperrabschnitt
- 314: Eingriffsöffnung
- 32: Gehäuse
- 320: Lagerstelle
- 33: Griff
- 330: Kabeleintrittsöffnung
- 331: Zugriffsöffnung
- 332: Rastelement
- 333, 334: Anschlag
- 335: Halterung
- 336: Gewindegangabschnitte
- 34: Sperrelement (Sperrstange)
- 340: Ende
- 341: Zapfen
- 342: Ende
- 343: Formschlusseinrichtung
- 344: Bund
- 345: Gewindegang
- 346: Standgenkörper
- 35: Verstellwerkzeug
- 350: Formschlusselement
- 36: Schalteinrichtung
- 37: Federelement
- 4: Gegensteckverbinderteil
- 40: Stecköffnung
- 41: Verriegelungseinrichtung
- α: Winkel
- A: Ausschnitt
- B: Betätigungsrichtung
- E: Einsteckrichtung
- L: Längsachse
- S: Drehrichtung
- V: Verstellrichtung

## Patentansprüche

1. Steckverbinderteil (3), mit
- einem Gehäuse (32),
- einem an dem Gehäuse (32) angeordneten Steckabschnitt (30), der steckend mit einem zugeordneten Gegensteckverbinderteil (4) in Eingriff bringbar ist,
- einem bewegbar an dem Gehäuse (32) angeordneten Verriegelungselement (31) zum Verriegeln des Steckverbinderteils (3) mit dem Gegensteckverbinderteil (4), wobei das Verriegelungselement (31) zwischen einer verriegelten Stellung, in der das Steckverbinderteil (3) mit dem Gegensteckverbinderteil (4) verriegelbar ist, und einer entriegelten Stellung, in der das Steckverbinderteil (3) von dem Gegensteckverbinderteil (4) entnehmbar ist, bewegbar ist, und
- einem an dem Gehäuse (32) angeordneten, entlang einer Längsachse (L) zu dem Gehäuse (32) verstellbaren Sperrelement (34) zum Sperren des Verriegelungselements (31) in der verriegelten Stellung,
**dadurch gekennzeichnet, dass** das Sperrelement (34) um die Längsachse (L) verdrehbar ist, wobei das Sperrelement (34) derart an dem Gehäuse (32) gelagert ist, dass bei einem Verdrehen um die Längsachse (L) das Sperrelement (34) längs entlang der Längsachse (L) bewegt wird, um das Sperrelement (34) zwischen einer sperrenden Stellung, in der das Sperrelement (34) sperrend in Wirkverbindung mit dem Verriegelungselement (31) ist, und einer entsperrenden Stellung, in der das Sperrelement (34) außer Wirkverbindung mit dem Verriegelungselement (31) ist, zu verstellen.

2. Steckverbinderteil (3) nach Anspruch 1, **dadurch gekennzeichnet, dass** das Sperrelement (34) als Gewindestange ausgebildet ist und mit dem Gehäuse (32) in Gewindeeingriff steht.

3. Steckverbinderteil (3) nach Anspruch 1 oder 2, **dadurch gekennzeichnet, dass** das Sperrelement (34) mindestens einen Gewindegang (344) aufweist, der mit zumindest einem Gewindegangabschnitt (336) des Gehäuses (32) in Eingriff steht.

4. Steckverbinderteil (3) nach einem der Ansprüche 1 bis 3, **dadurch gekennzeichnet, dass** das Sperrelement (34) mit einem ersten Ende (340) einem Sperrabschnitt (313) des Verriegelungselements (31) annäherbar ist, um das Verriegelungselement (31) in der verriegelten Stellung zu sperren.

5. Steckverbinderteil (3) nach Anspruch 4, **dadurch gekennzeichnet, dass** das Sperrelement (34) an seinem ersten Ende eine Eingriffseinrichtung (341) aufweist, die in der sperrenden Stellung formschlüssig in Eingriff mit dem Sperrabschnitt (313) des Verriegelungselements (31) steht.

6. Steckverbinderteil (3) nach Anspruch 4 oder 5, **dadurch gekennzeichnet, dass** das Sperrelement (34) an einem dem ersten Ende (340) abgewandten, zweiten Ende (342) eine Formschlusseinrichtung (343) zum formschlüssigen Verbinden mit einem Verstellwerkzeug (35) aufweist.

7. Steckverbinderteil (3) nach einem der vorangehenden Ansprüche, **dadurch gekennzeichnet, dass** das Sperrelement (34) einen entlang der Längsachse (L) erstreckten Stangenkörper (346) aufweist, über den das Sperrelement (34) an dem Gehäuse verdrehbar gelagert ist.

8. Steckverbinderteil (3) nach Anspruch 7, **dadurch gekennzeichnet, dass** das Sperrelement (34) einen radial von dem Stangenkörper (346) vorstehenden Bund (344) aufweist, der ausgebildet ist, mit zumindest einem Anschlag (333, 334) des Gehäuses (32) zum Begrenzen des Verstellwegs des Sperrelements (34) entlang der Längsachse (L) zusammenzuwirken.

9. Steckverbinderteil (3) nach einem der vorangehenden Ansprüche, **dadurch gekennzeichnet, dass** das Sperrelement (34) um einen vorbestimmten Winkel (α), insbesondere zwischen 45° und 180°, vorzugsweise zwischen 60° und 120°, beispielsweise 90°, zum Bewegen zwischen der sperrenden Stellung und der entsperrenden Stellung verdrehbar ist.

10. Steckverbinderteil (3) nach einem der vorangehenden Ansprüche, **dadurch gekennzeichnet, dass** das Sperrelement (344) ausgebildet ist, mit einem an dem Gehäuse (32) angeordneten federelastischen Rastelement (332) zusammenzuwirken.

11. Steckverbinderteil (3) nach Anspruch 10, **dadurch gekennzeichnet, dass** das Sperrelement (344) in der sperrenden Stellung eine erste Rastposition relativ zu dem Rastelement (332) einnimmt und/oder in der entsperrenden Stellung eine zweite Rastposition relativ zu dem Rastelement (332) einnimmt.

12. Steckverbinderteil (3) nach einem der vorangehenden Ansprüche, **dadurch gekennzeichnet, dass** das Sperrelement (31) in einem Griff (33) des Gehäuses (32) eingefasst ist.

13. Steckverbinderteil (3) nach Anspruch 12, **dadurch gekennzeichnet, dass** der Griff (33) eine Öffnung (331) aufweist, über die das Sperrelement (34) von außen zugänglich ist.
